# EUROPÄISCHE PATENTANMELDUNG

(11) **EP 1 285 794 A1**
(43) Veröffentlichungstag der Anmeldung: **26.02.2003**
(21) Anmeldenummer: 02018462.8
(22) Anmeldetag: 16.08.2002
(51) Int. Cl.: B60J 7/00, B60J 1/20

(54) **Sonnenrollovorrichtung für ein Fahrzeugdach**

(30) Priorität: 22.08.2001 DE 10140239
(71) Anmelder: Webasto Vehicle Systems International GmbH, 82131 Stockdorf (DE)
(72) Erfinder: Gaillard de Francois, 85390 Mouilleron en pareds (FR)
(74) Vertreter: Konnerth, Dieter Hans

(57) **Zusammenfassung**

Die Erfindung betrifft eine Sonnenrollovorrichtung zur Anordnung unter einem transparenten Dachbereich eines Fahrzeugs, insbesondere einer Limousine oder eines Coupés, wobei eine Sonnenrolloeinheit (10) eine an seitlichen Führungen (9) des Fahrzeugdaches (2) verschiebbar geführte Wickelwelle (11) aufweist, die zwischen einer insbesondere abgesenkten heckseitigen Ablagestellung und zumindest einer von der Ablagestellung beabstandeten Funktionsstellung unter dem transparenten Dachbereich (7) verstellbar ist. Vorzugsweise ist eine Antriebseinrichtung (18, 19) zum Aus- und Einfahren einer auf der Wickelwelle (11) angeordneten Rollobahn (12) vorgesehen, die eine mit der Wickelwelle (12) verschiebbare Einheit bildet, sowie eine Antriebseinrichtung (21, 23) zum Verschieben der Wickelwelle (11) vorgesehen, die karosseriefest gelagert ist und mit den die Wikkelwelle (11) lagernden Gleitelementen (14) über drucksteife Antriebselemente, insbesondere Antriebskabel (23), verbunden ist.

## Beschreibung

Die Erfindung betrifft eine Sonnenrollovorrichtung zur Anordnung unter einem transparenten Dachbereich eines Fahrzeugs, insbesondere einer Limousine oder eines Coupés.

Aus der DE 198 56 868 A1 ist eine Dachanordnung eines Fahrzeugs bekannt geworden, die einen Sonnenrollo zum unterseitigen Abdecken einer von einer lichtdurchlässigen Scheibe verschließbaren Dachöffnung enthält. Das zumindest eine Rollo ist mit seiner Wickelwelle am vorderen oder am hinteren festen Himmelteil vor bzw. hinter der Dachöffnung fest angeordnet. An der Vorderkante der Rollobahn ist eine Zugstange befestigt, die in seitlichen Führungsschienen geführt ist. Durch das Rollo kann jeweils nur ein an die Wickelwelle angrenzender Bereich abgeschattet werden. Für zusätzliche variable Abschattung ist ein zusätzlicher fester Schiebehimmel vorgesehen, der ebenfalls an den seitlichen Führungsschienen geführt ist.

Aufgabe der Erfindung ist es, eine eingangs genannte Sonnenrollovorrichtung zu schaffen, bei der mit einfachen Mitteln eine variable Abschattung einstellbar ist.

Diese Aufgabe wird erfindungsgemäß dadurch gelöst, daß die oben genannte Sonnenrollovorrichtung eine Sonnenrolloeinheit mit einer an seitlichen Führungen des Fahrzeugdaches verschiebbar geführten Wickelwelle aufweist, die zwischen einer insbesondere abgesenkten heckseitigen Ablagestellung und zumindest einer von der Ablagestellung beabstandeten Funktionsstellung unter dem transparenten Dachbereich verstellbar ist. Auf diese Weise kann die Wickelwelle bei Nichtgebrauch aus dem transparenten Dachbereich oder Glasdach in einen Randbereich verschoben oder verfahren werden, in dem sie aus dem Blickfeld der Fahrzeuginsassen im wesentlichen entfernt ist. Wird das Sonnenrollo benötigt, so wird es in eine vorgegebene Position oder in eine beliebige wahlweise einstellbare Position über die Länge das Daches eingestellt und eine Rollobahn wird dann in der gewünschten Länge ausgezogen und in der Position an den Führungen beispielsweise durch eine Klemmeinrichtung festgelegt.

Vorteilhafte Ausgestaltungen der Erfindung sind in den Unteransprüchen angegeben.

Vorzugsweise ist eine Antriebseinrichtung zum Aus- und Einfahren einer auf der Wickelwelle angeordneten Rollobahn vorgesehen, die eine mit der Wickelwelle verschiebbare Einheit bildet. Eine Verkleidung kann sowohl die Wickelwelle wie auch die Antriebseinrichtung umfassen und abdecken.

Zweckmäßigerweise ist die Wickelwelle beidseits an Gleitelementen gelagert, die an den seitlichen Führungen verschiebbar gelagert sind und ein an der Rollobahn befestigter Zugspriegel ist beidseits mit Gleitelementen verbunden, die an seitlichen Führungen, insbesondere an den Führungen der Gleitelemente für die Wikkelwelle, verschiebbar geführt sind. Unter Gleitelementen sind auch Schlitten oder dergleichen zu verstehen. Eine einfache und betriebssichere Verbindung der Gleitelemente des Zugspriegels mit der Antriebseinrichtung über drucksteife Antriebselemente, insbesondere über drucksteife Antriebskabel, ist bevorzugt.

Wenn eine Antriebseinrichtung zum Verschieben der Wickelwelle vorgesehen ist, die karosseriefest gelagert ist und mit den die Wickelwelle lagernden Gleitelementen über drucksteife Antriebselemente, insbesondere Antriebskabel, verbunden ist, so lassen sich die Bewegungen zum Verschieben der Wickelwelle wie auch zum Aus- und Einfahren der Rollobahn beliebig steuern. So kann eine Steuereinrichtung zum Betätigen einer bzw. der Antriebseinrichtung zum Ein- und Ausfahren der Rollobahn und zum Betätigen einer bzw. der Antriebseinrichtung zum Verschieben der Wickelwelle vorgesehen sein, so daß jeweils nur eine Antriebseinrichtung aktiv ist oder daß beide Antriebseinrichtungen in einem festen oder in einem zueinander regelbaren Verhältnis aktiv sind.

Zweckmäßigerweise ist die Wickelwelle an oder unter eine Hutablage in eine abgesenkte verdeckte Stellung verfahrbar.

Vorzugswiese sind die seitlichen Führungen im Bereich der beiden Dachlängsholme des Fahrzeugdaches angeordnet und der transparente Dachbereich enthält zumindest einen zu öffnenden Dachabschnitt. Auch kann der transparente Dachbereich ein zu öffnendes Lamellendach sein.

Nachfolgend wird ein Ausführungsbeispiel der Sonnenrollovorrichtung unter Bezugnahme auf die Zeichnung näher erläutert. Es zeigt:
- Fig. 1: in perspektivischer Draufsicht ein Fahrzeug mit einer erfindungsgemäßen Sonnenrollovorrichtung in Ablagestellung;
- Fig. 2: in perspektivischer Draufsicht das Fahrzeug mit der Sonnenrollovorrichtung in einer Funktionsstellung bei noch aufgewickeltem Rollo;
- Fig. 3: in perspektivischer Draufsicht das Fahrzeug mit der Sonnenrollovorrichtung in der Funktionsstellung gemäß Fig. 2 mit teilweise ausgezogenem Rollo;
- Fig. 4: in perspektivischer Draufsicht das Fahrzeug mit der Sonnenrollovorrichtung in einer weiteren Funktionsstellung und mit vollständig nach vorne ausgezogenem Rollo; und
- Fig. 5: in perspektivischer Draufsicht in schematischer Darstellung das Fahrzeugdach mit der Sonnenrollovorrichtung.

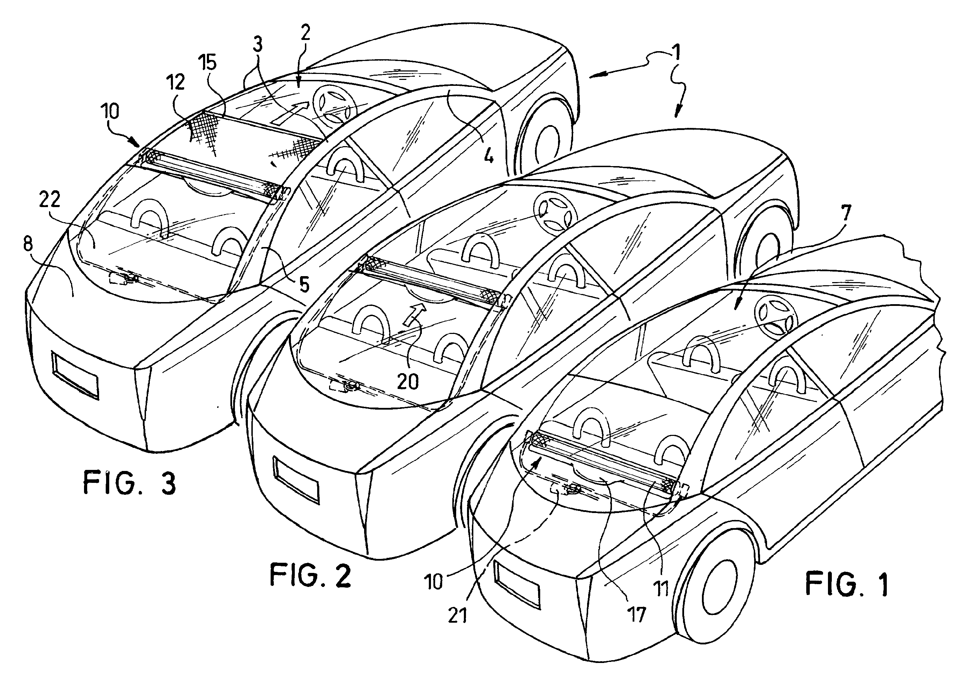

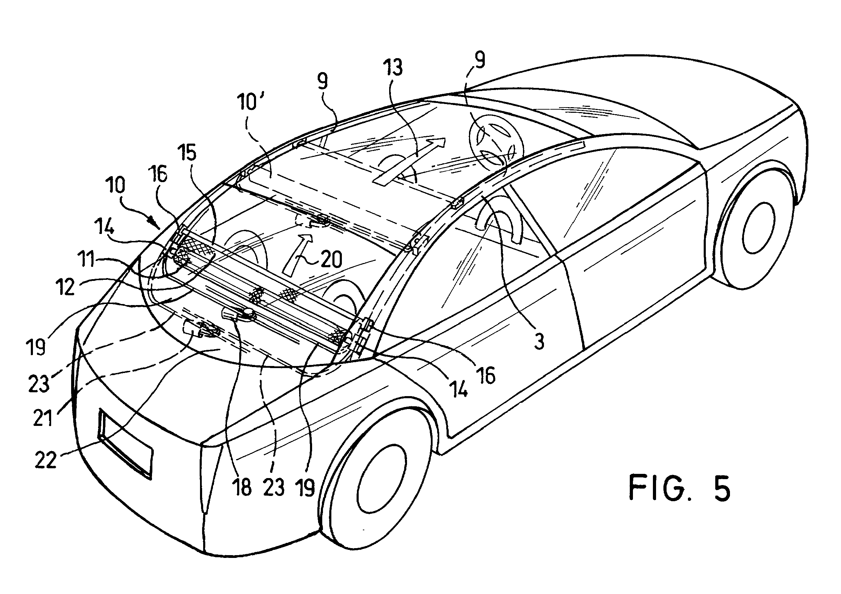

Ein Fahrzeug 1 (siehe Fig. 1 bis 4), im Ausführungsbeispiel eine vier- oder fünfsitzige Limousine oder ein Coupé, weist ein Fahrzeugdach 2 mit seitlichen Dachlängsholmen 3 auf, die sich vorne an die A-Säulen 4 anschließen und hinten in die C-Säulen 5 übergehen. Zwischen den Dachlängsholmen 3 erstreckt sich anschließend an die Windschutzscheibe 6 das Fahrzeugdach 2 in Form eines festen Glasdaches 7 in etwa bis zu einem Kofferraumdeckel 8. Das Glasdach 7 kann einteilig oder mehrteilig gebildet sein und der hintere Abschnitt kann auch eine Heckscheibe sein, die sich unmittelbar und übergangslos an das davor liegende Glasdach 7 anschließen kann. An der Innenseite jedes Dachlängsholmes 3 ist eine Führungsschiene 9 (siehe Fig. 5), beispielsweise ein Aluminiumprofil, angebracht, an der eine Sonnenrolloeinheit 10 verschiebbar gelagert ist.

Die Sonnenrolloeinheit 10 enthält eine Wickelwelle 11 und eine Rollobahn 12, die auf der Wickelwelle 11 aufgewickelt und gegen eine Wickelfeder, die die Wickelwelle 11 gegen die Auszugsrichtung (Pfeil 13 in Fig. 3) vorspannt, abrollbar ist. Die Wickelwelle 11 ist an jedem Ende an einem Wickelwellengleitstück 14 drehbar gelagert, das an der zugeordneten Führungsschiene 9 verschiebbar gelagert ist. Am Vorderende der Rollobahn 12 ist ein Zugspriegel 15 angebracht, der beidseits jeweils an einem Spriegelgleitstück 16 befestigt ist, das ebenfalls in der Führungsschiene 9 vor dem Wickelwellengleitstück 14 verschiebbar gelagert ist. Die Sonnenrolloeinheit 10 enthält des weiteren eine Antriebseinrichtung für die Rollobahn 12 mit einem unter einer Verkleidung 17 (Fig. 1) neben der Wickelwelle 11 angeordneten Antriebsmotor 18, der über zwei Zug-/Druckkabel 19 oder Bowdenzüge mit den beiden Spriegelgleitstücken 16 verbunden ist, um diese zum Ausfahren der aufgewickelten Rollobahn 12 aus ihrer Anordnung an den Wickelwellengleitstücken 14 nach vorne zu verschieben und zum Einfahren der Rollobahn 12 nach hinten gegen die Wickelwellengleitstücke 14 zu verschieben.

Eine zweite Antriebseinrichtung zum Verschieben der Sonnenrolloeinheit 10 entlang der beiden Führungsschienen 9 in Fahrzeuglängsrichtung (Pfeil 20 in Fig. 2) unter dem Glasdach 7 enthält einen elektrischen Antriebsmotor 21, der beispielsweise unter einer Hutablage 22 angeordnet ist und über zwei Zug-/Druck-Antriebskabel 23 oder Bowdenzüge mit den beiden Wickelwellengleitstücken 14 verbunden ist, um diese entlang der beiden Führungsschienen 9 zu verschieben.

Zum Abschatten eines hinteren Bereichs des Glasdaches 7 bzw. der Heckscheibe wird mittels des Antriebsmotors 18, beispielsweise durch Betätigung eines Schalters durch den Fahrer oder durch einen Fahrzeuginsassen auf einem Rücksitz, und der an den Führungsschienen 9 verschiebbaren Spriegelgleitstücke 16 der Zugspriegel 15 nach vorne verschoben, so daß die Rollobahn 12 von der Wickelwelle 11 gegen die Kraft der Wickelfeder abgewickelt wird. Je nach Länge der Rollobahn 12 kann auch das gesamte Glasdach 7 von der Hutablage 22 bis zur Windschutzscheibe 6 abgedeckt werden.

Durch Betätigen des zweiten Antriebsmotors 21 kann die Sonnenrolloeinheit 10 aus der Ablagestellung gemäß Fig. 1, in der sie mit aufgerollter Rollobahn 12 beispielsweise in einer Vertiefung der Hutablage 22 bündig angeordnet ist, als Einheit zusammen mit dem Antriebsmotor 18, den Antriebskabeln 13 und den Spriegelgleitstücken 16, mittels der Wickelwellengleitstücke 14 entlang der Führungsschienen 9 nach vorne verschoben werden, beispielsweise in eine Funktionsstellung gemäß Fig. 2 am Oberrand einer Heckscheibe oder eines Heckscheibenbereichs des Glasdaches 7 (entspricht der Stellung 10' der Sonnenrolloeinheit in Fig. 5).

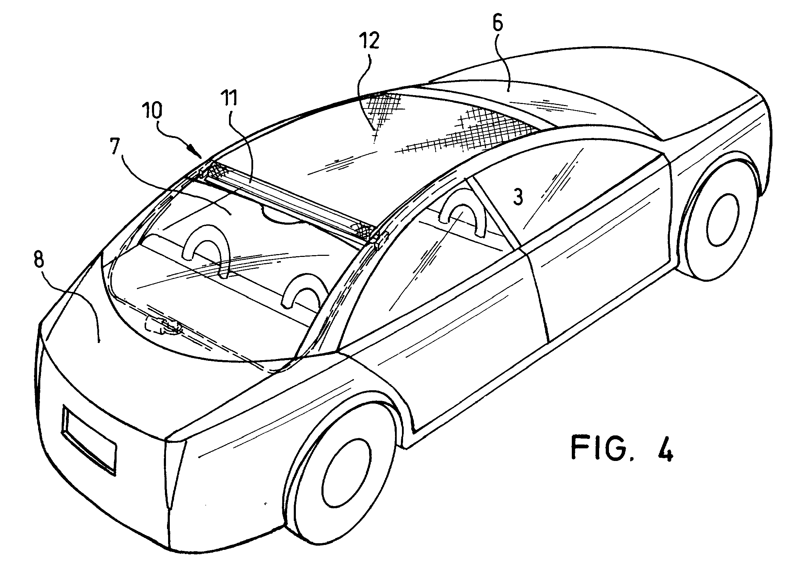

In dieser Funktionsstellung wird durch Betätigen des ersten Antriebsmotors 18 die Rollobahn 12 durch den Zugspriegel 15 nach vorne in eine Zwischenstellung (Fig. 3 und 5) oder bedarfsweise bis zur Windschutzscheibe 6 ausgefahren (Fig. 4), um den Bereich der Fahrzeuginsassen wunschgemäß abzuschatten.

Die Steuerung zur Betätigung der beiden Antriebsmotore 18 und 21 ist derart ausgelegt, daß aus einer Funktionsstellung der Sonnenrolloeinheit 10, beispielsweise wie in Fig. 3 dargestellt, durch synchrone Antriebsbewegung beider Antriebsmotore 18 und 21 der Zugspriegel 15 und damit der Vorderrand der Rollobahn 12 ortsfest gehalten wird, während gleichzeitig die Wickelwelle 11 nach hinten verfahren wird. Auf diese Weise kann aus einer beliebigen Position der Wickelwelle 11 und des Zugspriegels 15 an den Führungsschienen bzw. am Glasdach 7 eine in Fahrzeuglängsrichtung in beide Richtungen gerichtete Öffnungsbewegung wie auch eine solche Schließbewegung der Rollobahn 12 durch Verlagerung der Wickelwelle 11 und/oder des Zugspriegels 15 vorgenommen werden. Ebenso kann eine Verlagerung der in einer bestimmten Länge ausgezogenen Rollobahn 12 ohne Veränderung ihrer Auszugslänge entlang dem Glasdach 7 durchgeführt werden.

In einer vereinfachten Ausführungsform sind beispielsweise nur eine oder zwei Funktionsstellungen der Sonnenrolloeinheit 10 einstellbar.

Das Fahrzeugdach 2 kann statt eines festen geschlossenen Glasdaches 7 auch zumindest ein öffnungsfähiges Dachteil aufweisen, z. B. einen Deckel, der beispielsweise spoilerartig ausstellbar ist und auch als außengeführter Deckel nach hinten über den geschlossenen Teil des Glasdaches 7 verfahrbar ist.

Zusätzlich zu der beschriebenen Sonnenrolloeinheit 10 kann eine weitere Sonnenrolloeinheit vorgesehen sein, die beispielsweise an denselben Führungsschienen verschiebbar gelagert ist und in der Ablagestellung im oder am festen Himmel am Oberrand der Windschutzscheibe angeordnet ist. Die Rollobahn der weiteren Sonnenrolloeinheit ist nach hinten ausziehbar und sie ist durch manuelle Betätigung oder durch motorische Antriebe entsprechend der ersten Sonnenrolloeinheit 10 bedienbar.

### Bezugszeichenliste

- 1: Fahrzeug
- 2: Fahrzeugdach
- 3: Dachlängsholm
- 4: A-Säule
- 5: C-Säule
- 6: Windschutzscheibe
- 7: Glasdach
- 8: Kofferraumdeckel
- 9: Führungsschiene
- 10: Sonnenrolloeinheit
- 11: Wickelwelle
- 12: Rollobahn
- 13: Pfeil
- 14: Wickelwellengleitstück
- 15: Zugspriegel
- 16: Spriegelgleitstück
- 17: Verkleidung
- 18: Antriebsmotor
- 19: Zug-/Druckkabel
- 20: Pfeil
- 21: Antriebsmotor
- 22: Hutablage
- 23: Antriebskabel

## Patentansprüche

1. Sonnenrollovorrichtung zur Anordnung unter einem transparenten Dachbereich eines Fahrzeugs, insbesondere einer Limousine oder eines Coupés,
**dadurch gekennzeichnet,**
**daß** eine Sonnenrolloeinheit (10) eine an seitlichen Führungen (9) des Fahrzeugdaches (2) verschiebbar geführte Wickelwelle (11) aufweist, die zwischen einer heckseitigen Ablagestellung und zumindest einer von der Ablagestellung beabstandeten Funktionsstellung unter dem transparenten Dachbereich (7) verstellbar ist.

2. Sonnenrollovorrichtung nach Anspruch 1,
**dadurch gekennzeichnet, daß** eine Antriebseinrichtung (18, 19) zum Ausund Einfahren einer auf der Wickelwelle (11) angeordneten Rollobahn (12) eine mit der Wickelwelle (12) verschiebbare Einheit bildet.

3. Sonnenrollovorrichtung nach Anspruch 1 oder 2,
**dadurch gekennzeichnet, daß** die Wickelwelle (11) beidseits an Gleitelementen (14) gelagert ist, die an den seitlichen Führungen (9) verschiebbar gelagert sind und daß ein an der Rollobahn (12) befestigter Zugspriegel (15) beidseits mit Gleitelementen (16) verbunden ist, die an seitlichen Führungen, insbesondere an den Führungen (9) der Gleitelemente (14) für die Wickelwelle (11), verschiebbar geführt sind.

4. Sonnenrollovorrichtung nach Anspruch 3,
**dadurch gekennzeichnet, daß** die Gleitelemente (16) des Zugspriegels (15) über drucksteife Antriebselemente, insbesondere Antriebskabel (19), mit der Antriebseinrichtung verbunden sind.

5. Sonnenrollovorrichtung nach einem der Ansprüche 1 bis 4,
**dadurch gekennzeichnet, daß** eine Antriebseinrichtung (21, 23) zum Verschieben der Wickelwelle (11) vorgesehen ist, die karosseriefest gelagert ist und mit den die Wickelwelle (11) lagernden Gleitelementen (14) über drucksteife Antriebselemente, insbesondere Antriebskabel (23), verbunden ist.

6. Sonnenrollovorrichtung nach einem der Ansprüche 1 bis 5,
**dadurch gekennzeichnet, daß** eine Steuereinrichtung zum Betätigen einer bzw. der Antriebseinrichtung (18) zum Ein- und Ausfahren der Rollobahn und zum Betätigen einer bzw. der Antriebseinrichtung (21) zum Verschieben der Wickelwelle (11) vorgesehen ist, so daß jeweils nur eine Antriebseinrichtung aktiv oder daß beide Antriebseinrichtungen (18, 21) in einem festen oder in einem zueinander regelbaren Verhältnis aktiv sind.

7. Sonnenrollovorrichtung nach einem der Ansprüche 1 bis 6,
**dadurch gekennzeichnet, daß** die Wickelwelle (11) an oder unter eine Hutablage (22) in eine abgesenkte verdeckte Stellung verfahrbar ist.

8. Sonnenrollovorrichtung nach einem der Ansprüche 1 bis 7,
**dadurch gekennzeichnet, daß** die seitlichen Führungen (9) im Bereich der beiden Dachlängsholme (3) des Fahrzeugdaches (2) angeordnet sind.

9. Sonnenrollovorrichtung nach einem der Ansprüche 1 bis 8,
**dadurch gekennzeichnet, daß** der transparente Dachbereich (7) zumindest einen zu öffnenden Dachabschnitt aufweist.

10. Sonnenrollovorrichtung nach einem der Ansprüche 1 bis 9,
**dadurch gekennzeichnet, daß** der transparente Dachbereich (7) ein zu öffnendes Lamellendach ist.
